# EUROPEAN PATENT APPLICATION

(11) **EP 4 837 690 A1**
(43) Date of publication of application: **11.11.2026**
(21) Application number: 25174960.2
(22) Date of filing: 08.05.2025
(51) Int. Cl.: B23K 26/03, B23K 26/21, B23K 26/70

(54) **DEVICE FOR IMPROVEMENT OF LASER PROCESSING AND USE THEREOF**

(71) Applicant: EMPA Eidgenössische Materialprüfungs- und Forschungsanstalt, 8600 Dübendorf (CH); Magnebotix AG, 8952 Schlieren (CH)
(72) Inventor: Shevchik, Sergey, 8600 Dübendorf (CH); Hoffmann, Patrik, 8600 Dübendorf (CH); Vaucher, Sebastien, 8600 Dübendorf (CH); Yadav, Pinku, 8600 Dübendorf (CH); Rajani, Chang, 8600 Dübendorf (CH); Gervasoni, Simone, 8049 Zürich (CH); Wasmer, Kilian, 8600 Dübendorf (CH); Le Quang, Tri, 8600 Dübendorf (CH)
(74) Representative: Prins Intellectual Property AG

(57) **Abstract**

The disclosed invention describes magnetic field stimulation of heated materials during laser processing, comprising a laser source, a laser focusing system for focusing a laser beam on a surface of the processed material, coils for generation of static or dynamic magnetic field and/or for sensing the response of the material exposed to static or dynamic magnetic field, optional acoustic/optical emission sensor(s) for measuring emissions from the process zone, a processing unit that interprets the response of material to static or dynamic magnetic field excitation and / or optical / acoustic emissions in terms of processing quality and accordant change of static or dynamic magnetic field strength, and / or frequency, and / or orientation, and / or spatial / volumetric flux distribution to compensate the quality deviations from the desired one.

## Description

### TECHNICAL FIELD

The invention relates to a laser processing device for quality improvement comprising a laser light source, a preparation unit to focus the laser beam, at least one coil to generate static or dynamic magnetic fields, a sensor to measure properties of the material processed and / or of its environment, and a processing unit which is connected to the at least one coil and the sensor, where the connection between the sensor and the processing unit is configured in such a way that the measurement data of the sensor is receivable by the processing unit and a use thereof.

### STATE OF THE ART

Materials subjected to static or dynamic magnetic fields (M-fields) exhibit phenomena during heating or solidification. Electrically conductive materials exposed to an M-field develop Eddy currents, which induce a volumetric Lorenz force within the material. The strength of this force is proportional to the M-field, enabling controlled induction of Eddy currents in uniform homogeneous materials. Studies like Avilov et al. ('Full penetration laser beam welding of thick duplex steel plates with electromagnetic weld pool support', in J. Laser Appl., vol. 28, 2016, article num. 0224202016) have demonstrated that using an M-field can enhance metal laser processing by improving penetration depth, grain structure, and reducing defects such as pores and cracks.

Existing M-field stimulation techniques struggle in real-world applications due to challenges like heterogeneous materials and overheating. These issues disrupt Eddy current distribution and Lorenz force, causing irregular mass flow that leads to poor weld quality with defects such as pores and cracks. A study by Xu et al. ('Weld bead characteristics for full-penetration laser welding of aluminum alloy under electromagnetic field support', in J. Mater. Process. Tech-nol., 288 (2020), article num. 116896) confirms these problems, which hinder the practical application of M-field methods.

Several inventions exist today trying to profit from M-field stimulation and to improve laser processing. In CN201410392196.3A, for example, an M-field stimulation of metals during laser welding/cladding is utilized. Here an alternating or static M-field is generated and its focus is aligned with the process zone. Since the setup is independent of the actual quality of the processed materials, it requires well-controlled processing conditions (e.g., where processing distortions are dismissively small).

The problem of possible fluctuations of the actual quality of the processed material is addressed in DE201310000745, where the depth of the weld joint is correlated with the change of the M-field density.

In A CN109124647 M-fields are exploited for the detection of defects inside the process zone during laser processing of metals. Here the detection system proposed can be used as a part of the control system to ensure the quality of the processed materials. Since the control addresses the modulations of the power of the laser beam, this however requires complex control strategies.

Several inventions CN109414779A; EP3459672; JP2018001184A; JP6815764B2; KR102133763B1; KR20190006551A; US2019210159A1; WO2018003202A1 follow the same logic as CN109124647. They propose different schemes for using M-fields for quality monitoring in laser welding. In particular, parameters such as the M-field strength are measured directly during the process run and are correlated with the processing quality, while the results of monitoring may be directed to the control system, which modulates the power of the laser source and compensates the quality deviations. The employed control system has drawbacks: Due to very complex laser-matter interactions, laser-induced heat distributions and absorptions of low penetration of laser inside the matter, this approach requires very complex control strategies and is known not to be robust against distortions.

Some recent prior art patents were found which try to improve laser welding with magnetic field assistance.

In CN116638189, a laser welding platform with multi-angle protection and annular magnetic field assistance is disclosed, proposing the influence on the melted pool by magnetic field during welding. The patent follows some technological solution how to place the coils and the optical elements to realize the welding process with the field stimulation. The parameters of the field are kept the same during welding.

CN116810144 proposes a device that realizes the application of the magnetic field to laser welds. The patent is focused on the technological part (e.g. the elements of the device and the placement of its elements around the process zone), rather than on the conceptual part. GB2612360A utilizes the use of electrodes for both the generation of the arc and the static/magnetic fields.

CN118682218A (Welding method for improving consistency of overall structure performance of thick-wall TC4 titanium alloy narrow-gap laser wire filling welding joint and application, 2024) also proposes a specific setup to realize magnetic field stimulation.

CN117564476 also proposes the mechanism that provide the welding of the joints and application of the predefined magnetic field for matter stimulation inside the joints.

It is not clear if the magnetic field can be modulated, however tuning in response to the current situation inside the process zone is not proposed. The need to change the field parameters during processing or the tuning of the field are not disclosed.

The prior art does not disclose the need of changing and adjusting the parameters of the modulated magnetic field to adjust it to the conditions of the process zone.

### DESCRIPTION OF THE INVENTION

An objective of the present invention is to provide a device for laser processing with stimulation and improvement of weld quality which does not exhibit the abovementioned issues and improves the conditions of the process zone.

At least one of the objectives is achieved by a laser processing device with stimulation and improvement of quality according to claim 1 and a use according to claim 11.

The laser processing device with quality stimulation comprises a laser light source, a preparation unit to focus the laser beam, at least one coil to generate static or dynamic magnetic fields, an electronically controllable power supply, at least one sensor to measure properties of the material processed and / or of its environment, and a processing unit which is connected to the power supply, the coil and the sensor, where the connection between the sensor and the processing unit is configured in such a way that the measurement data of the sensor is receivable, respectively is received, by the processing unit.

Furthermore, the connection between the processing unit, the power supply and the coil is configured in such a way that signals generated by the processing unit are receivable, respectively are received, by the power supply and coil and that the parameters of the electromagnetic or magnetic fields generated by the at least one coil are adaptable, respectively are adapted, during the process by means of these signals.

### BRIEF DESCRIPTION OF THE DRAWINGS

Further understanding of various aspects of the invention can be obtained by reference to the following detailed description in conjunction with the associated drawings, which are described briefly below.

It should be noted that in the differently described embodiments, the same parts are provided with the same reference symbols or the same component names, the disclosures contained in the entire description being able to be applied analogously to the same parts with the same reference symbols or the same component symbols.

A preferred exemplary embodiment of the subject matter of the invention is described below in conjunction with the attached drawings.
- Figure 1: shows a device scheme with a placement of coils on one side of the material processed;
- Figure 2: shows a device scheme with a placement of coils on different sides of the material processed;
- Figure 3: shows a device scheme with a placement of coils on different sides of the material processed, with coils for generating the excitation field, coils with a static field and coils for sensing the derivative electromagnetic field;
- Figure 4: shows pictures demonstrating the negative effect of a magnetic field on laser welding processing according to prior art;
- Figure 5: shows high-resolution pictures of the negative effect of a magnetic field on laser welding processing according to prior art.

### DESCRIPTION

A device for laser processing with quality stimulation is described in the following, wherein different setups are possible.

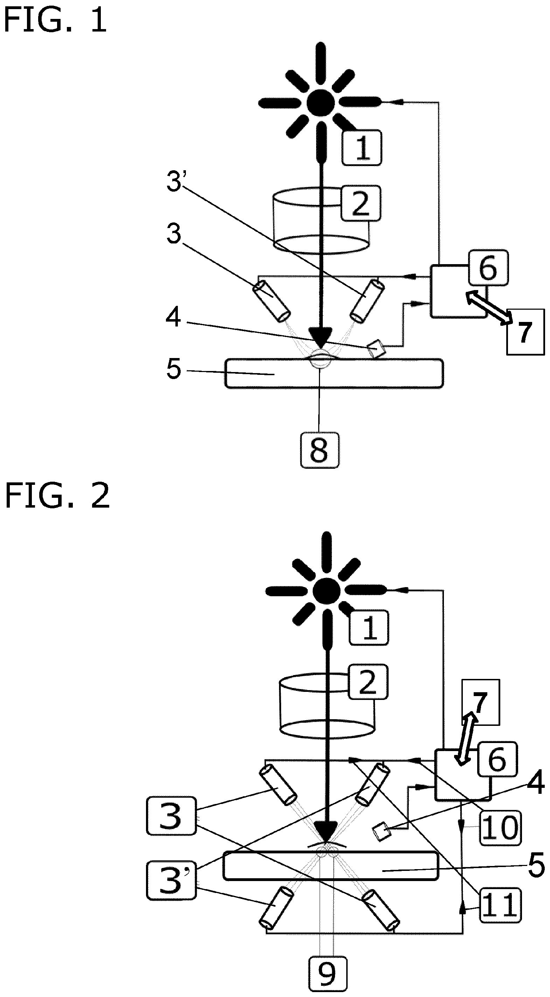

Figure 1 shows a possible implementation of the functional scheme of the system proposed. Here a laser light source 1 generates a laser beam which passes through a focusing system 2 before reaching the main process zone 8 of the material processed 5. The focusing system 2 may for example include one or more lenses and / or a water chamber. Furthermore, a processor unit 6 is employed. This processor unit 6 on the one hand receives input from at least one sensor 4, most preferred multiple sensors 4 and on the other hand produces and sends input through the controllable power supply included in the processing unit for at least one coil 3, most preferred multiple coils 3, 3' and possibly also the laser source 1. The coils 3, 3' are placed on the same side of the material processed 5 as the laser beam is applied. The coils 3 receive input from the processing unit 6: the processing unit 6 for example sends voltage / current to the coils 3 via not shown connections, when an excitation (M-) field is generated. The at least one sensor 4 supplies data to the processing unit 6, whereby all data in the processing unit 6 is processed by a software system 7.

The processor unit 6 is moreover configured in such a way that the data received from the at least one sensor 4 is feedable, respectively is fed, to the software system 7 and the output of the software system 7 is transmissible, respectively is transmitted, to the at least one coil 3 through the connection between the processing unit 6, the controllable power supply and the coil 3. In addition, the software system 7 is configured in such a way, that the measurement data of the at least one sensor 4 is relatable, respectively is related, to quality-properties of the material 5 processed, these quality-properties of the material 5 processed are relatable, respectively are related, to a set of values of parameters of static or dynamic magnetic fields such as those generated by the at least one coil 3, and the set of values is transferable, respectively is transferred, into a signal which can be received by the at least one coil 3.

The quality may be the crystaline structure (i.e. types of Crystals formed during/after solidification), grain sizes and/or grain orientations, magnetic domains sizes and/or orientations, material fusion and intermaterial bonds (in case of processing of different metals, for example), number of defects (pores, cracks), material loss during spatter (being a cause of material overheating inside the process zone). Alternatively, the fields may be applied to regulate heat induced and Marangoni mass flow inside the heat affected zone and regulate the vapour behaviour inside the keyhole (locking it inside the keyhole or provoking its leakage through the keyhole outlet on the surface of the process zone).

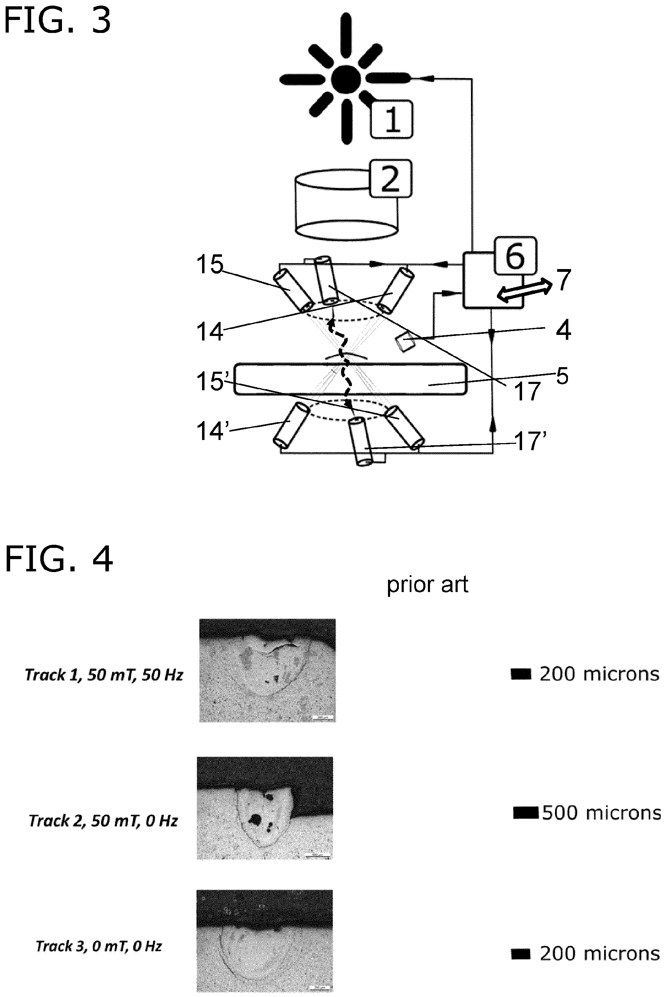

Figure 2 and 3 show alternative configurations. These include positionings of multiple coils 3, 3' on both sides of the material processed 5.

Moreover, instead of just one way, one may have a bidirectional connections 10, 11 between the coils 3, 3' and the processing unit 6 and the coils 3, 3' may also be used to sense the emitted derivative field induced by Eddy currents and the sensed data from the coils 3 may be sent to the processing unit 6 via the connection 10, 11.

Figure 3 also shows a setup, where the coils 3 can be employed for sensing the quality in the process zone.

In particular, the coil pairs in the figure can be focused on different areas of the heat affected zone, embracing its different parts and applying different magnetic field stimulation strategies to each part of the process zone. For example, some coils may aim to reduce the number of pores inside the center of the process zone applying one field modulations strategy. The other coil pairs may be focused on the side of the heat affected zone, for example effecting its tail where the materials are solidified. These alternating fields may be applied to reach the predefined (grain) structure of the material during its solidification. These coils may also impose static magnetic field in case the magnets are printed or processed and the solidification in this case may be carried out inside static magnetic field.

In this case one coil pair 14, with coils on top and bottom of the processed material 5 can be employed to generate the exciting (M-) field, and subsequently a static field is applied via the coil pair 15, also on both sides of the processed material 5, while simultaneously sensing the derivative field via the coil pair 17, on both sides of the processed material 5 is carried out. The sensing of the derivative field with the coil pair 17 is marked with a serpentine line diagonal through the processed material 5.

The coils 3, 3', 14, 14', 15, 15' are excitation sources in first place, wherein their generated fields are directed towards each other.

The coil pairs 3, 3' and 17 can optionally also sense the derivative fields.

The coil pairs 3, 3' 14, 14', 15', 17, 17' are most preferred attached crosswise, partly on the underside of the processed material 5 and partly on the upper side of the processed material 5.

In all configurations of the device for laser processing, the control of the system in terms of the processing unit 6 works as follows:
A: The processing unit 6 receives data from the coils 3, 17 and / or the sensors 4. The sensors 4 can measure one or more of the following:
   - optical emissions in the visible spectral range (400 - 800) nm;
   - optical emissions in near infrared spectral range (1000 - 5000) nm;
   - optical emissions in far infrared spectral range (8000-32000 nm);
   - at least two measurements of the field density, taken above and below the processed piece (to be more precise, above and below the process zone inside the piece);
   - acoustic emission, detected by one or more contact sensors attached to the work piece;
   - acoustic emission, detected by one or more microphones (e.g., airborne);
   - vibration (e.g., acceleration), detected by one or more sensors attached to the work piece;
   - vibration of the work-piece surface measured distantly by one or more interferometric sensors;
   - data from one or more fiber optical sensors attached to the work piece surface or installed distantly from it (Fabry-Perot interferometer, Fiber Bragg grating, optical fiber heterodyne interferometer, in which one fiber is attached to the surface of the work piece or placed distantly from it);
   - fluctuations of the M-field, detected by receiving coils.
   All sensing from coils 3, 17 and/or the sensors 4 can be carried out all together at the same time.
B: The processing unit 6 puts the input data in correspondence with the actual quality of the material processed 5. The correlation can be organised, for example, as a machine / deep learning model. Its inputs could be the measurements, while the output is the quality grade. Alternatively, the correlation can be organised as a finite state automaton, which puts in correspondence specific combinations of inputs (e.g., measurements) with specific quality grades as output. More simple realizations of the organisation of the correlation could be a standard correlation function, the inputs of which could be the patterns (from any measurements listed above) and the output the patterns that correspond to etalon quality. Additionally, empirical functions defined by the user could be included. For example, the peak of the signals, the raise time of the signals, and the moment of the signals could be compared according to a user-defined manner.
C: After the correlation between the inputs 11 of the processing unit 6 and the processing quality is established, the processing unit 6 induces changes of the M-field parameters by sending an appropriate signal via the connection 10 to the coils 3. The changes needed can be computed according to control theory. In particular, Bayesian optimization of M-field parameters can be applied in this step. In this setup, a Gaussian process (GP) can be utilized as a surrogate model for the description of the optimal M-field parameters, linking those to processing dynamics. The parameter space of GP includes the M-field parameters, and it can also be expanded to include physical parameters of the process zone. The GP cost/utility function can be the actual quality grade, observed under specific M-field parameters. The strong side of Bayesian optimization is that there is no need of any prior knowledge about the process. The GP model can be reconstructed/adapted during the process run. Alternatively, Koopman operator control can be utilized to modulate the M-field. Also, classical control with a given physical model can be utilized here. In this case, the physical model of the processing in the presence of M-field has to be deployed and has to provide an acceptable accuracy for the process description.
D: The processing unit 6 may also induces other actions, like the adaption of the parameters of the laser source 1.
   Here the sensing and excitation (of the M-field) are carried out simultaneously, but they can also be carried out temporally resolved (alternating excitation and sensing, which follow one after another, and at the same time the changes to the parameters of the excitation (M-) field are applied to improve the quality). The input to the processing unit 6 from the coils 3 is correlated with the processing quality and changes to the parameters of the M-field are applied to improve this momentary quality.

In particular, M-field parameters such as strength, orientation (e.g., spatial orientation of B vector), frequency (e.g., change of the direction of B vector) and spatial field flux distribution 9 are tuned. In particular, the orientation of the B vector may be changed in a complex manner (not only following a sinusoid). For example, the Lissajous curve orientation in a plane or in 3D space can be applied to obtain a complex M-field configuration. In this case, the frequency means the consequent pass of B by all orientations, defined by a Lissajous curve (with the further repentance of the Lissajous curve). Additionally, the orientation of B may not follow a periodic manner, but can also follow a chaotic attractor oscillation manner, or even be unique for each period of time. The manner of vector B orientation is defined by the control algorithm, which changes the corresponding parameter.

Additional to the changes of M-field parameters, the changes of the parameters of the laser irradiation (of the energy dose that is transmitted to the material), the control of material feed rate, the control of material shift relative to the energy source etc. can be provided.

The employment of feedback-tuned static or dynamic magnetic fields in order to steer properties of the material processed has several advantages over the solutions known from prior art.

Firstly, the alternative solution to electromagnetic or magnetic field stimulation is the development of an automated control system that keep the desired quality of the processed materials by modulating the laser parameters (first of all laser power). Despite alleged simplicity, such a control problem is very challenging due to non-linear transformation of incident laser light into heat. The reason is the absorption of the light only by the surface of the materials. In this case, the heat transfer from the surface to the underlying (or inner) volume relies on complex flows. The latter can hardly be forecast (if possible to do so at all). To deal with this complex control strategies have to be developed, the robustness of which may be very costly to reach (both computationally and financially). In contrast, an electromagnetic or magnetic field is capable to penetrate uniformly through the entire volume of the process zone, providing volume uniform stabilization. Another advantage of an electromagnetic or magnetic field stimulation is the linear relation of the field strength to the Lorenz force, which directly affects the mass transfer inside the process zone. This simple relation allows to efficiently apply linear control algorithms, that are simple in technical realization and are cheap in design/preparation.

Secondly, the benefits of using electromagnetic or magnetic fields during laser processing are already known, one can for example compensate for deviations of material properties in terms of pore rates, grain structure, surface roughness, and shape/orientation of the melt pool, but so far, the fields are only employed in a static manner.

Not being able to adapt the fields according to changes in the properties of the material processed may negatively affect the quality of the end product even if those changes are accounted for in a different manner (e.g., by modulations concerning the laser source), because the electromagnetic or magnetic fields themselves may have a negative impact on the quality of the material processed if they are not configured appropriately.

Such a negative effect is for example shown in Figure 4, known from prior art. Here the strongly ferromagnetic material FeNdB was exposed to the laser scan without (see Track 3) and with (Track 1 and Track 2) magnetic field excitation. It can be seen from the images that the application of the field provokes the occurrence of pores inside the material (see Track 1 and Track 2), as compared to the exposure without field application (Track 3).

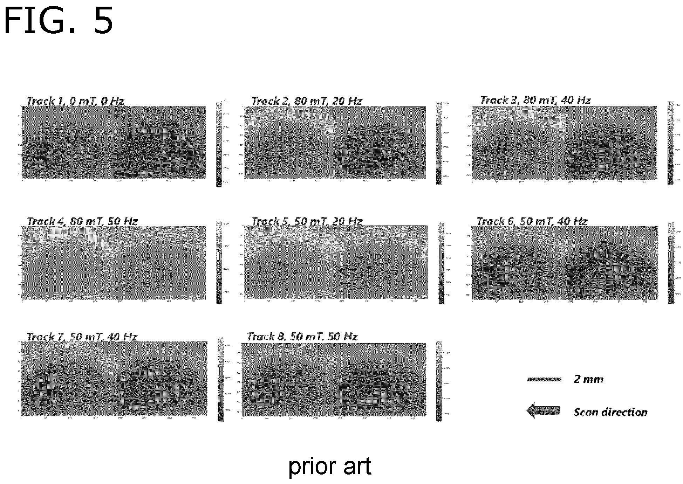

Furthermore, Figure 5 shows an example of the application of a magnetic field stimulation to an Al work piece. The laser weld was performed as shown in the picture with and without the presence of a magnetic field. The minimum number of pores was observed when applying a field of 50 mT, 40 Hz. As can be seen from the picture, the further increase of field strength up to 80 mT does not increase the efficiency of pore removal. The same can be observed for a slight increase of frequency up to 50 Hz, which does not show better results either. This indicates that the increase of the frequency and strength of the field not necessarily improves the quality, requiring optimization and tuning of field parameters.

In the solution presented here, this search for the optimal field parameters is in particular carried out using a fully automated system.

In some embodiments the input data from sensor 4 for the software system 7 can be an empty set when the output follows some predefined sequence (feed forward control), or the software system 7 may be configured in a way such that upon a predefined input additional to the input data from sensor 4 the output follows some predefined sequence (feed forward control).

In some embodiments sensor 4 may correspond to one or more of the following options: the coil generating the electromagnetic or magnetic field and/or a separate coil, configured to detect electromagnetic or magnetic fields; they passively sense the derivative field, generated by Eddy currents, invoked by the original excitation field, and interpret it as a local conductivity of the material;
if it is the same coil as generating the field this may be done by switching between the two tasks)
or
to realize a magnetic resonance tomography (MRT) (this could be done as follows: the pairs of transmitting-receiving coils around the process zone allow to excite / relax specific atomic / electron levels of selected materials inside the process zone using high frequency magnetic fields, and during the relaxation the sensing of emitted photons can be carried out to reconstruct the local non-uniformities inside the process zone), a sensor 4 to detect optical emissions, a sensor 4 to detect acoustic emissions, a sensor 4 to detect vibrations, for example a photo-diode 4 or a piezo electrical sensor 4.

In some embodiments the coils 3, 3', 14, 14', 15, 15', 17, 17' may be placed on one side of the material processed or on both sides of the material processed, and / or the coils 3, 3', 14, 14', 15, 15', 17, 17' may come in pairs, and / or the coils 3, 3', 14, 14', 15, 15', 17, 17' may be configured in a way such that the electromagnetic or magnetic fields they generate are spatially adjusted to the process zone and / or the area the material processed enters after the process zone.

In some embodiments the parameters of the electromagnetic or magnetic fields to be adapted may be one or more of the following: the strength, the frequency, the orientation, the density, the focus area, the spatial and / or volumetric flux distribution. This can be achieved by applying different current / voltage to coils by means of signals from the processing unit and these changes for example affect the local mass flow (Eddy currents in external (electro-) magnetic fields are affected by Lorenz forces, making it possible to slow down or speed up the mass flow).

In some embodiments the processing unit may be configured to receive simultaneous or temporally resolved measurement data from the sensor and send signals to the coil, and / or the processer unit may also be connected to the laser light source, and / or each coil or coil pair may be excited by the computer-controlled power supply in a unique way via the signal from the processing unit.

The sensing and adapting of the fields can be done directly during processing of the material, i.e., the quality of the material can be controlled in real time.

In some embodiments the environment and / or parts of the device may be shielded from the static or dynamic magnetic fields, and / or the field generating coils may be cooled using preferably cryogenic cooling techniques.

In some embodiments some coil pairs may be used for generation of excitation field that includes the changes of field parameters, while some coils pairs may be used to generate a static field, while another coil pair may be used for pure sensing of the derivative fields, where the generation of excitation field and generation of the static field with simultaneous sensing are temporally resolved and follow one each other, while the sensing in this case aims to detect the resonance frequencies with their further correlation to processing quality.

Beside a device for laser processing with quality stimulation different uses are presented in the following in detail.

The use comprises the following steps: the connection between the processing unit 6 and the coils 3, 3', 14, 14', 15, 15', 17, 17' transfers signals generated by the processing unit 6 to the coils 3, 3', 14, 14', 15, 15', 17, 17' and these signals cause an adaption of the parameters of the electromagnetic or magnetic fields generated by the coils 3, 3', 14, 14', 15, 15', 17, 17' , the processing unit 6 feeds the data received from the sensor 4 to the software system 7 and transmits the output of the software system 7 through the computer-controlled power supplies to the coils 3, 3', 14, 14', 15, 15', 17, 17' through the connection between the processing unit 6 and the coils 3, 3', 14, 14', 15, 15', 17, 17' , and the software system 7 relates the measurement data of the sensor 4 to quality-properties of the material processed 5, relates these quality-properties of the material processed 5 to a set of values of parameters of electromagnetic or magnetic fields such as those generated by the coils 3, 3', 14, 14', 15, 15', 17, 17' , and transfers the set of values into currents from the computer-controlled power supplies which energize the field-generating coils 3, 3', 14, 14', 15, 15', 17, 17' .

In some uses, the input data from the sensor 4 for the software system 7 is an empty set and the output follows some predefined sequence (feed forward control), or the software system 7 generates an output which follows some predefined sequence upon a predefined input additional to the input data from the sensor 4, feed forward control.

In some uses, the sensor 4 corresponds to one or more of the following options: the coil 3, 3', 14, 14', 15, 15', 17, 17' generating the electromagnetic or magnetic field and / or a separate coil 3, 3', 14, 14', 15, 15', 17, 17' , configured to detect electromagnetic or magnetic fields (they passively sense the derivative field, generated by Eddy currents, invoked by the original excitation field, and interpret it as a local conductivity of the material; if it is the same coil 3, 3', 14, 14', 15, 15', 17, 17' as generating the field this may be done by switching between the two tasks) or to realize a magnetic resonance tomography (MRT) (this could be done as follows: the pairs of transmitting-receiving coils 3, 3', 14, 14', 15, 15', 17, 17' around the process zone allow to excite / relax specific atomic / electron levels of selected materials inside the process zone using high frequency magnetic fields, and during the relaxation the sensing of emitted photons can be carried out to reconstruct the local non-uniformities inside the process zone), a sensor 4 to detect optical emissions, a sensor 4 to detect acoustic emissions, a sensor 4 to detect vibrations, a photo-diode, a piezo electrical sensor 4.

In some uses, the coils 3, 3', 14, 14', 15, 15', 17, 17' are placed on one side of the material processed or on both sides of the material processed, and / or the coils 3, 3', 14, 14', 15, 15', 17, 17' come in pairs, and / or the coils 3, 3', 14, 14', 15, 15', 17, 17' generate electromagnetic or magnetic fields that are spatially adjusted to the process zone and / or the area the material processed enters after the process zone.

In some uses, the parameters of the electromagnetic or magnetic fields to be adapted are one or more of the following: the strength, the frequency, the orientation, the density, the focus area, the spatial and / or volumetric flux distribution. This can be achieved by applying different current / voltage to coils 3, 3', 14, 14', 15, 15', 17, 17' by means of signals from the processing unit and these changes for example affect the local mass flow (Eddy currents in external (electro-) magnetic fields are affected by Lorenz forces, making it possible to slow down or speed up the mass flow).

In some uses, the processing unit receives simultaneously or temporally resolved measurement data from the sensor 4 and sends signals to the coil 3, 3', 14, 14', 15, 15', 17, 17' , and / or the processing unit is also connected to the laser light source, and / or each coil 3, 3', 14, 14', 15, 15', 17, 17' or coil pair is excited in a unique way via the signal from the processing unit.

The sensing and adapting of the fields can be done directly during processing of the material, i.e., the quality of the material can be controlled in real time.

In some uses, the environment and / or parts of the device are shielded from the electromagnetic or magnetic fields, and / or the field generating coils 3, 3', 14, 14', 15, 15', 17, 17' are cooled using preferably cryogenic cooling techniques.

In some uses, some coil pairs are used for generation of excitation field that includes the changes of field parameters, while some coils pairs are used to generate a static field, while another coil pair is used for pure sensing of the derivative fields, where the generation of excitation field and generation of the static field with simultaneous sensing are temporally resolved and follow one each other, while the sensing in this case aims to detect the resonance frequencies with their further correlation to processing quality.

### LIST OF REFERENCE NUMERALS

- 1: Laser
- 2: focusing system / Preparation unit
- 3, 3': Coil (pair, excitation (M-) field, optional sensing derivative field)
- 4: Sensor
- 5: Processed material
- 6: Processing unit
- 7: Software system
- 8: Process zone
- 9: Spatial field flux distribution
- 10: Connection outgoing from processing unit
- 11: Connection incoming to processing unit
- 14: Coil pair excitation field
- 15: Coil pair (static field)
- 17: Coil pair (for sensing derivative field)

## Claims

1. Laser processing device for quality improvement comprising a laser light source (1), a preparation unit (2) to focus the laser beam, at least one pair of coils (3, 3') or of coils (14, 14') to generate static or dynamic magnetic fields, a sensor (4) to measure properties of the material processed (5) and / or of its environment, and a processing unit (6) which is connected to the at least one pair of coils (3, 3', 14, 14') and the sensor (4), where the connection between the sensor (4) and the processing unit (6) is configured in such a way that the measurement data of the sensor (4) is receivable by the processing unit (6),
**characterized in that**
the coils (3, 3') or coils (14, 14') are both positioned on the top of the material processed (5) or the coils (3, 3', 14, 14') are positioned crosswise partly on the top and on bottom of the material processed (5), generating the excitation field directed towards each other,
while the sensor (4) is positioned on the top of the material processed (5), wherein
at least a pair of the connection between the processing unit (6), the coil pairs (3, 3', 14, 14') and the sensor (4) is configured in the form of a feedback loop in such a way that signals generated by the processing unit (6) are receivable by the pair of coils (3, 3', 14, 14') and that the parameters of the static or dynamic magnetic fields generated by the coil pairs (3, 3', 14, 14') are adaptable by means of these signals,
the processing unit (6) is configured in such a way that the data received from the sensor (4) is feedable to a software system (7) connected to the processing unit (6) and the output of the software system (7) is transmissible to the coil pairs (3, 3', 14, 14') through the connection (10), comprising a computer-controllable power supply between the processing unit (6) and the coils (3, 3', 14, 14'),
and the software system (7) is configured in such a way, that the measurement data of the sensor (4) is relatable to quality-properties of the material processed (5), these quality-properties of the material processed (5) are relatable to a set of values of parameters of static or dynamic magnetic fields generated by the coil pairs (3, 3', 14, 14') for future processing, and the set of values is transferable into a signal which can be received by the coils (3, 3', 14, 14').

2. Laser processing device according to claim 1, wherein two coil pairs (3, 3') are used, directed towards each other and each arranged partly on the top of the processed material (5) and on the bottom of the processed material (5), wherein both coil pairs (3, 3') also sense the derivative fields of the processed material (5).

3. Laser processing device according to claim 1, wherein in addition to the pair of coils (14, 14'), a further pair of coils (15, 15') is arranged with one coil (15) above the processed material (5) and one coil (15') below the processed material (5) and thus crosswise as an excitation source for a static field.

4. Laser processing device according to one of the preceding claims, wherein a further pair of coils (17, 17') is arranged with one coil (17) above the processed material (5) and one coil (17') below the processed material (5) and thus crosswise for sensing derivative fields of the processed material (5).

5. Laser processing device according to one of the preceding claims, wherein the input data from the sensor (4) for the software system (7) is an empty set and the output follows some predefined sequence, or the software system (7) is configured in a way such that upon a predefined input additional to the input data from the sensor (4) the output follows some predefined sequence.

6. Laser processing device according to one of the preceding claims, wherein the sensor (4) corresponds to one or more of the following options: the at least one coil (3, 14, 15, 17) generating the static or dynamic magnetic field and optionally detecting said field and / or a separate or additional coil (3', 14', 15', 17'), configured to detect static or dynamic magnetic fields or to realize a magnetic induced tomography (MIT) or magnetic resonance tomography (MRT) or simply detecting electromagnetic emissions or the magnetic field changes from the process zone, a sensor to detect optical emissions, a sensor to detect acoustic emissions, a sensor to detect vibrations, a photo-diode, a piezo electrical sensor.

7. Laser processing device according to one of the preceding claims, wherein used coils (3, 3', 14, 14', 15, 15') are configured in a way such that the static or dynamic magnetic fields generated are spatially adjusted to the process zone (8) and/or spatially distributed over the process zone (8) in a predefined configuration, providing non-uniformity of it, showing local field gradients along the process zone (8) and the heat affected zone around.

8. Laser processing device according to one of the preceding claims, wherein the parameters of the static or dynamic magnetic fields to be adapted are one or more of the following:
the strength, the frequency, the orientation, the density, the focus area, the spatial and / or volumetric flux distribution.

9. Laser processing device according to one of the preceding claims, wherein the processing unit (6) is configured to receive simultaneous or temporally resolved measurement data from the sensor (4) and send signals to the coils (3, 3', 14, 14', 15, 15'), and / or the processer unit (6) is also connected to the laser light source (1) and/or each coil pair (3, 3', 14, 14', 15, 15') is excited in a unique way via the signal from the processing unit (6) through the computer-controllable power supply.

10. Laser processing device according to one of the preceding claims, wherein the parts of the device are shielded from the static or dynamic magnetic fields and/or the field generating coils (3, 3', 14, 14',15,15') are cooled using cryogenic cooling techniques.

11. Use of a device for laser processing and/or material beam processing with quality stimulation, wherein a connection (10) between a processing unit (6) and excitation coil pairs (3, 3', 14, 14', 15, 15') transfers signals generated by the processing unit (6) to the coil pairs (3, 3', 14, 14', 15, 15') through the computer-controllable power supply and these signals cause an adaption of the parameters of the static or dynamic magnetic fields generated by the coil pairs (3, 3', 14, 14', 15, 15'),
the processing unit (6) feeds the data received from a sensor (4) to a software system (7) and transmits the output of the software system (7) to the excitation coil pairs (3, 3', 14, 14', 15, 15') through the connection (10) comprising a computer-controllable power supply between the processing unit (6) and the excitation coil pairs (3, 3', 14, 14', 15, 15'),
and the software system (7) relates the measurement data of the sensor (4) to quality-properties of a material processed (5), relates these quality-properties of the material processed (5) to a set of values of parameters of static or dynamic magnetic fields such as those generated by the excitation coil pairs (3, 3', 14, 14', 15, 15') for future processing, and transfers the set of values into a signal which can be received by the excitation coil pairs (3, 3', 14, 14', 15, 15') through a computer-controllable power supply.

12. Use according to claim 11, wherein coils of excitation coil pairs (3, 3', 14, 14', 15, 15') are directed towards each other and each arranged partly on the top of the processed material (5) and on the bottom of the processed material (5), wherein the coil pairs (3, 3') also sense the derivative fields of the processed material (5).

13. Use according to claim 12, wherein additional coils (17, 17') are directed towards each other and each arranged partly on the top of the processed material (5) and on the bottom of the processed material (5), which sense the derivative fields of the processed material (5).

14. Use according to one of the preceding claims 11 to 13, wherein the input data from the sensor (4) for the software system (7) is an empty set and the output follows some predefined sequence, or the software system (7) generates an output which follows some predefined sequence upon a predefined input additional to the input data from the sensor (4).

15. Use according to one of the claims 11 or 14, wherein the sensor (4) corresponds to one or more of the following options: the excitation coil pairs (3, 3', 14, 14', 15, 15') generating the static or dynamic magnetic field configured to detect static or dynamic magnetic fields or to realize a magnetic induced tomography (MIT) magnetic resonance tomography (MRT), or detection of electromagnetic emissions or the magnetic field changes from the process zone a sensor to detect optical emissions, a sensor to detect acoustic emissions, a sensor to detect vibrations, a photo-diode, a piezo electrical sensor.

16. Use according to one of the claims 11 to 15, wherein the excitation coil pairs (3, 3', 14, 14', 15, 15') generate static or dynamic magnetic fields that are spatially adjusted to the process zone (8) and/or the area the material processed (5) enters after the process zone (8).

17. Use according to one of the claims 11 to 16, wherein the parameters of the static or dynamic magnetic fields to be adapted are one or more of the following: the strength, the frequency, the orientation, the density, the focus area, the spatial and / or volumetric flux distribution.
